# EUROPEAN PATENT SPECIFICATION

(11) **EP 1 595 322 B1**
(45) Date of publication and mention of the grant of the patent: **12.06.2019**
(21) Application number: 04710136.5
(22) Date of filing: 11.02.2004
(51) Int. Cl.: H02J 3/44, H02P 9/04, H02J 3/40

(54) **DEVICE AND METHOD FOR GENERATING ELECTRIC CURRENT**
EINRICHTUNG UND VERFAHREN ZUM ERZEUGEN EINES ELEKTRISCHEN STROMS
DISPOSITIF ET PROCEDE POUR GENERER DU COURANT ELECTRIQUE

(30) Priority: 12.02.2003 SE 0300374
(43) Date of publication of application: 16.11.2005
(73) Proprietor: Scania CV AB (publ), 151 87 Södertälje (SE)
(72) Inventor: STALFORS, Carl, S-152 31 Södertälje (SE); HEDSTRÖM, Lars-Gunnar, S-610 71 Vagnhärad (SE); MATTOLA, Veikko, S-610 74 Vagnhärad (SE)
(74) Representative: Scania CV AB
(86) International application number: PCT/SE2004/000174
(87) International publication number: WO 2004/073137

(56) References cited:
- EP-A2- 2 197 100
- DE-A1- 3 836 418
- DE-A1- 4 101 821
- DE-A1- 4 101 821
- DE-A1- 19 620 586
- DE-A1- 19 620 586
- JP-A- 2000 014 197
- JP-A- 2000 014 197
- US-A- 4 874 961
- US-A- 4 874 961

## Description

### FIELD OF THE INVENTION AND STATE OF THE ART

The present invention relates to a device for generating electric current according to the preamble of claim 1 and a method according to the preamble of claim 8 for control of a device intended to generate electric current for an alternating-current (AC) network.

The invention is applicable in contexts where electricity generating units comprising a combustion engine and a generator driven by the combustion engine are used for generating electric current for an AC network, e.g. in an industrial plant for generating emergency power or effecting so-called "peak shaving" or in a ship, an aircraft or a train. Such a type of electricity generating unit is often called a "GenSet" (Generator Set). For a multiplicity of reasons it may be advantageous in such contexts to use a multiplicity of separate electricity generating units which each comprise a smaller combustion engine coupled to a smaller generator for generating electric current for one and the same AC network, instead of using a single electricity generating unit with a considerably larger combustion engine and generator. Inter alia, the energy loss will be significantly greater when a large combustion engine or generator is taken out of operation for maintenance or repair than when a smaller combustion engine or generator is taken out of operation. Before being connected to an energised AC network, an electricity generating unit of the type here concerned has to be phase-synchronised with the AC network. If the electricity generating unit is not in phase with the AC network at the time of being connected to it, connection may result in strong peak currents in the AC network and great damage to the combustion engine and generator of the electricity generating unit. When using a multiplicity of electricity generating units which are connectable in parallel to an AC network, it is therefore necessary for each electricity generating unit to be phase-synchronised with the AC network before being connected to it. In an isolated AC network which is initially not energised, the first electricity generating unit to be activated need not be phase-synchronised, whereas further electricity generating units activated thereafter have to be phase-synchronised before being connected to the now energised AC network.

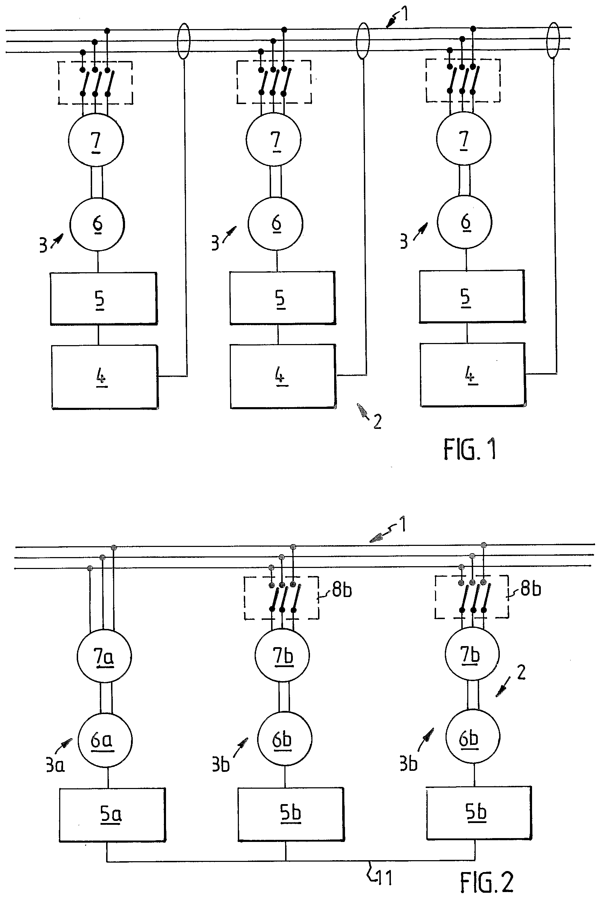

A previously known practice for making the aforesaid phase synchronisation possible is to provide each electricity generating unit with a control assembly, a so-called "GenSet controller", as illustrated in Fig. 1. This controller 4 measures the phase angle of the AC network 1 and conveys control information related to the phase angle measured to the engine control unit 5 of the electricity generating unit's combustion engine 6, whereby the combustion engine is controlled on the basis of said control information so that the associated generator 7 is phase-synchronised with the AC network. Fig. 1 illustrates a device 2 in accordance with the state of the art with three electricity generating units 3 which are each provided with their respective controller 4 and are connected to a common three-phase AC network 1.

Also known from US-4874961-A is the practice of using in a device of the type here concerned a form of slave control whereby a controller of a first electricity generating unit serves as a so-called master which sends control signals to the control assemblies of other electricity generating units to make it possible for the other electricity generating units to be synchronised with the electricity generating unit which is provided with the master. Alternatively, all of the electricity generating units may be arranged to be supplied from a common master with control signals which make it possible for the electricity generating units to be synchronised with the AC network concerned. The synchronising method described in US-4874961-A involves relatively complicated control equipment for the various electricity generating units and is therefore complicated and expensive to implement.

### OBJECT OF THE INVENTION

The object of the present invention is to provide a device and a method which in a simple and cost-effective manner make it possible for two or more mutually cooperating electricity generating units to be synchronised as required for connection to an AC network.

### SUMMARY OF THE INVENTION

According to the invention, said object is achieved by means of a device exhibiting the features indicated in claim 1 and a method exhibiting the features indicated in claim 8.

The solution according to the invention entails the engine control unit of a first electricity generating unit, which engine control unit serves as a so-called master unit, transmitting to the respective engine control units of the other electricity generating units which form part of the device, which engine control units serve as so-called slave units, information concerning the speed and angular position of the combustion engine of the first electricity generating unit. Each slave unit then regulates the speed and angular position of the associated combustion engine on the basis of said information so that the generator coupled to the combustion engine is synchronised with the generator of the first electricity generating unit. It will thus be possible to effect the required synchronisation of the respective "slave generators" without the electricity generating unit of each "slave generator" having to be provided with a controller which measures the phase angle of the AC network. The solution according to the invention is particularly simple in that each "slave engine", i.e. each combustion engine controlled by a slave unit, need only be controlled on the basis of the speed and angular position of the "master engine", i.e. the combustion engine controlled by the master unit. No comparison between the phase angle of the current generated by each "slave generator" and the phase angle of the AC network or the phase angle of the current generated by the "master generator" need be done, which means that the solution according to the invention can be implemented with relatively simple control equipment.

According to the invention, the generators of the first and second electricity generating units are coupled to the respective combustion engines in such a way that all the generators are in mutually the same angular position when the combustion engines are in mutually the same angular position, whereby the second engine control unit is arranged to synchronise the angle of the second combustion engine with that of the first combustion engine on the basis of said information about speed and angular position so that the second generator is thereby synchronised with the first generator. According to the invention, the generators are thus coupled in an identical manner to the respective combustion engines, which means that all that is required for achieving the necessary synchronisation between the generators is direct angle synchronisation between the combustion engines, i.e. the combustion engines being caused to assume mutually the same angular position.

According to one embodiment of the invention, the device comprises a controller provided with means for measuring the phase angle of the AC network, whereby the controller is arranged to transmit to the first engine control unit control information relating to the phase angle measured, and the first engine control unit is arranged to regulate the speed and angular position of the first combustion engine on the basis of such information so that the first generator is phase-synchronised with the AC network. It thus becomes possible to connect the generators of the electricity generating units to an AC network which is already energised from the outset, i.e. from before the device starts generating electric current for the AC network.

According to a further embodiment of the invention, the first engine control unit is arranged to transmit to the second engine control unit time-marked information concerning the angular position of the first combustion engine. This time marking makes it possible to relate the angular position information transmitted by the first engine control unit to a particular point in time, which means that the regulating as necessary of the second combustion engine can be done with great accuracy. According to a further embodiment of the invention, the first engine control unit is arranged to transmit to the second engine control unit time information which enables time synchronisation of the second engine control unit with the first engine control unit. This makes it possible to ensure that the engine control units work with one and the same time reference.

According to a further embodiment of the invention, the first engine control unit is connected to the second engine control unit via a CAN bus. This makes rapid and reliable signal transmission possible between the engine control units.

Further embodiments of the device according to the invention and the method according to the invention are indicated by the dependent claims and the ensuing description.

### BRIEF DESCRIPTION OF THE DRAWINGS

The invention is described in more detail below by means of examples of embodiments with reference to the attached drawings, in which:
- Fig. 1: is a schematic illustration of a device according to the state of the art with a separate controller for each individual electricity generating unit,
- Fig. 2: is a schematic illustration of a device according to a first embodiment of the present invention and
- Fig. 3: is a schematic illustration of a device according to a second embodiment of the present invention.

### DETAILED DESCRIPTION OF EMBODIMENTS

Fig. 2 illustrates extremely schematically a first embodiment of a device 2 according to the invention for generating electric current for an AC network 1. In this case the device comprises three electricity generating units 3a, 3b, which each comprise an AC generator 7a, 7b connected to the AC network 1, a combustion engine 6a, 6b for driving the generator 7a, 7b, and an engine control unit 5a, 5b for controlling the combustion engine 6a, 6b. One of the electricity generating units is arranged to de-energise electric current to the AC network 1 before the other electricity generating units are connected to the AC network. This electricity generating unit 3a serves as a so-called master and is hereinafter called the first electricity generating unit, and the other electricity generating units 3b each serve as a so-called slave and are called second electricity generating units. The components of the first electricity generating unit are correspondingly called the first controller 5a, the first combustion engine 6a and the first generator 7a. The corresponding components of the second electricity generating unit are called accordingly the second controller 5b, the second combustion engine 6b and the second generator 7b.

The device 2 illustrated in Fig. 2 is intended to generate electric current for an isolated AC network 1 which is not energised initially, i.e. before the device 2 starts generating electric current for the AC network 1. In this situation, the first electricity generating unit 3a, which is intended to start generating current for the AC network 1 before any of the other electricity generating units 3b are connected to the AC network, does not need phase-synchronising with the AC network. The first electricity generating unit 3a therefore need not have any circuit-breaker arranged between the generator 7a and the AC network 1. However, to enable the electricity generating unit 3a to be disconnected from the AC network, e.g. for repair or maintenance purposes, it is advantageous to have the generator 7a of the first electricity generating unit connected to the AC network 1 via a circuit-breaker. The second electricity generating units 3b are intended for connection to the AC network 1 when the latter is already energised. Each of the second electricity generating units 3b therefore needs to have its generator be connected to the AC network 1 via a circuit-breaker 8b.

In accordance with the solution according to the invention, the engine control unit 5a of the first electricity generating unit is arranged to transmit to the engine control unit 5b of each of the second electricity generating units 3b information concerning the speed and angular position of the combustion engine 6a of the first electricity generating unit. The engine control unit 5b of each second electricity generating unit 3b is then arranged to regulate the speed and angular position of the combustion engine 6b on the basis of said information about the speed and angular position of the combustion engine 6a of the first electricity generating unit so that the generator 7b is synchronised with the generator 7a of the first electricity generating unit. After this synchronisation, the generator 7b is arranged to be connected to the AC network 1 by closing of the circuit-breaker 8b.

In more detail, each of the second engine control units 5b is arranged to guide the associated second combustion engine 6b to running at the same speed or at least substantially the same speed as the first combustion engine 6a and to assuming an angular position relative to the first combustion engine 6a such that the second generator 7b driven by the second combustion engine 6b is caused to assume the same or at least substantially the same angular position as the first generator 7a. The first and second generators 7a, 7b will thus run at mutually the same or at least substantially the same angular position, which means that these generators 7a, 7b will generate electric current at mutually the same or at least substantially the same phase angle. The generators 7a, 7b will thus be phase-synchronised with one another. A certain slight mutual deviation between the phase angles of the current from said generators 7a, 7b may be accepted without risk of any detrimental effects on the AC network 1 or the device 2.

The device 2 illustrated in Fig. 2 is intended to be controlled in the following manner:
- The first step is starting of the first combustion engine 6a, thereby causing the first generator 7a to generate electric current for the AC network 1. This involves the combustion engine 6a being guided by the first engine control unit 5a to a desired speed. At this stage the circuit-breakers 8b are in an open position so that the second electricity generating units 3b remain disconnected from the AC network 1.
- Information concerning the speed and angular position of the first combustion engine 6a is transmitted from the first engine control unit 5a to the respective second engine control units 5b.
- In each of the second electricity generating units 3b, the speed and angular position of the second combustion engine 6b are regulated by the associated second engine control unit 5b on the basis of said information so that the second generator 7b coupled to the second combustion engine 6b is synchronised with the first generator 7a. This regulating is done, for example, in such a way that the second combustion engine 6b is run up to the same or approximately the same speed as the first combustion engine 6a, followed by the angular position of the second combustion engine 6b being adjusted to the desired angular position on the basis of the angular position of the first combustion engine 6a, e.g. by means of a regulator which by suitable adjustments of the speed of the second combustion engine 6b causes the second combustion engine 6b to assume the desired angular position. Regulating may also be effected by the second combustion engine 6b being run up to a speed which differs somewhat from the speed of the first combustion engine 6a, followed by the speed of the second combustion engine 6b being immediately caused to match or at least substantially match the speed of the first combustion engine 6a when the second combustion engine 6b is at the desired angular position.
- After said regulating of speed and angular position, the second generator 7b is connected to the AC network 1 by closing of the associated circuit-breaker 8b. The second generators 7b may be connected to the AC network either simultaneously or in succession one after another.
- After the connection of the second generators 7b, the second engine control units 5b change mode to only regulating the engine power and load distribution between the electricity generating units on the basis of control information from the first engine control unit 5a.

Each electricity generating unit 3b is with advantage so designed as to be able, if so required, to serve as master for activation of the device 2, i.e. for starting up the device 2 and connecting it to the AC network 1. It will thus be possible to activate the device 2 even if the electricity generating unit marked with the reference notation 3a in Fig. 2 is for any reason out of operation. The operational reliability of the device is thus increased. In that situation, the device illustrated in Fig. 2 will only run with the electricity generating units which are marked with the reference notation 3b. In such circumstances, one of these electricity generating units 3b will thus serve as the aforesaid first electricity generating unit in the manner described above for the first electricity generating unit.

Supposing that the generators 7a, 7b of all of the electricity generating units 3a, 3b are connected to the AC network 1 via a circuit-breaker, there is also the possibility of changing the master freely from time to time, i.e. changing the particular electricity generating unit which in a given activation of the device 2 is to serve as the controlling electricity generating unit, whereby the speed and angular position of its combustion engine control the angular position and speed of the other combustion engines. In an individual activation of the device 2 it is thus possible to decide which of the electricity generating units 3a, 3b is on that occasion to serve as the aforesaid first electricity generating unit in the manner described above for the first electricity generating unit. Such alternation of the master function among the electricity generating units makes it possible to ensure that the wear to which the electricity generating units are subjected is as mutually even as possible, e.g. by using as master whichever electricity generating unit currently has the shortest operating time. Any electricity generating unit which always serves as the master in a device will build up a longer operating time than the other electricity generating units of the device and be subject to greater wear.

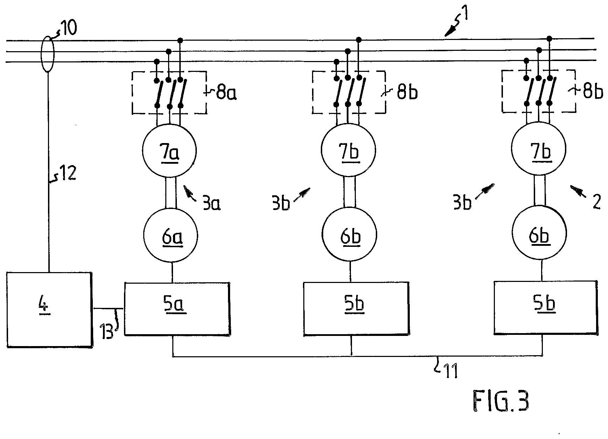

Fig. 3 illustrates a further embodiment of the device 2 according to the invention. The device 2 illustrated in Fig. 3 is intended to generate electric current for an AC network 1 which may be energised initially, i.e. before the device 2 starts generating electric current for the AC network 1. The first electricity generating unit 3a, which is intended to be connected to the AC network 1 before any of the other electricity generating units 3b is connected to the AC network, has to be phase-synchronised with the AC network in cases where the AC network 1 is already energised. In such cases the generator 7a of the first electricity generating unit 3a has to be connected to the AC network 1 via a circuit-breaker 8a.

In the description of the embodiment according to Fig. 3, the same designations and reference notations are used throughout as in the description above of the embodiment according to Fig. 2 for corresponding items.

As in the embodiment according to Fig. 2, each electricity generating unit 3a, 3b comprises a generator 7a, 7b connected to the AC network 1, a combustion engine 6a, 6b for driving the generator 7a, 7b, and an engine control unit 5a, 5b for controlling the combustion engine 6a, 6b. The generator 7a, 7b of each of the electricity generating units 3a, 3b is connected to the AC network 1 via a circuit-breaker 8a, 8b.

The device 2 illustrated in Fig. 3 comprises a controller 4 provided with means 10 for measuring the phase angle of the AC network 1. The controller 4 is arranged to transmit to the first engine control unit 5a control information relating to the phase angle measured, and this engine control unit 5a is arranged to regulate the speed and angular position of the associated first combustion engine 6a on the basis of said control information so that the generator 7a of the first electricity generating unit 3a is phase-synchronised with the AC network 1, i.e. so that the current generated by this generator 7a is brought into phase with the current in the AC network 1. After this regulating of the speed and angular position of the first combustion engine 6a, the first generator 7a is arranged to be connected to the AC network 1 by closing of the circuit-breaker 8a. The device 2 illustrated in Fig. 3 is in other respects intended to function in the same manner as described above for the embodiment according to Fig. 2. When the first engine control unit 5a has effected said regulating of the speed and angular position of the first combustion engine 6a, this engine control unit 5a is thus arranged to transmit to the engine control unit 5b of each of the other electricity generating units 3b information concerning the speed and angular position of the first combustion engine 6a. The engine control unit 5b of each second electricity generating unit 3b is then arranged to regulate the speed and angular position of the associated combustion engine 6b on the basis of said information concerning the speed and angular position of the first combustion engine 6a so that the associated second generator 7b is synchronised with the first generator 7a. After this synchronisation, the second generator 7b is arranged to be connected to the AC network 1 by closing of the circuit-breaker 8b.

The generators 7a, 7b of the first and second electricity generating units 3a, 3b are with advantage coupled to the respective combustion engines 6a, 6b in such a way that all of the generators 7a, 7b are in mutually the same angular position when the combustion engines 6a, 6b are in mutually the same angular position. In this situation, the engine control unit 5b of each of the second electricity generating units 3b is arranged to synchronise the angle of the associated second combustion engine 6b with that of the first combustion engine 6a on the basis of said information about speed and angular position so that the associated second generator 7b is thereby synchronised with the first generator 7a before being connected to the AC network 1. Angular synchronisation here means the second combustion engine 6b being caused to assume the same angular position as the first combustion engine 6b. Should the generators 7a, 7b not be coupled to the combustion engines 6a, 6b in such an identical manner, it will be necessary, when regulating the angular position of a combustion engine 6b of any of the second electricity generating units 3b, to take into account the mutual difference in connection angle between the various combustion engine/generator combinations 6a, 7a and 6b, 7b.

The engine control unit 5a of the first electricity generating unit 3a is with advantage arranged to transmit to the other engine control units 5b time-marked information concerning the angular position of the first combustion engine 6a. The first engine control unit 5a is with advantage also arranged to transmit to the other engine control units 5b time information which enables time synchronisation of these engine control units 5b with the first engine control unit 5a, i.e. some form of time reference.

The transmission of information between the engine control units 5a, 5b takes place with advantage via a databus 11, preferably in the form of a CAN bus (CAN = Controller Area Network), but it would of course also be possible for the engine control units 5a, 5b to be connected together via some other form of link or network, such as, for example, FlexRay, TTCAN (Time Triggered Controller Area Network) or TTP (Time Triggered Protocol).

In the embodiment illustrated in Fig. 3, a measuring means 10 which forms part of the abovementioned means for measuring the phase angle of the AC network 1 is connected to the controller 4 via a first link 12, and the controller 4 is itself connected to the engine control unit 5a of the first electricity generating unit 3a via a second link 13.

Each combustion engine 6a, 6b takes the form preferably of a piston engine, in which case the aforesaid angular position of the combustion engine means, for example, the angular position of the crankshaft or flywheel of the combustion engine.

The device according to the invention may with advantage be used to generate electric current for an AC network in a ship, an aircraft, a train or an industrial plant.

In the embodiments illustrated in Figs. 2 and 3, the device 2 comprises a first electricity generating unit 3a and two second electricity generating units 3b. The number of second electricity generating units 3b may nevertheless be greater or smaller than as here illustrated. Figs. 2 and 3 also illustrate devices designed to generate electric current for a three-phase AC network. It is nevertheless also possible for the device according to the invention to be designed to generate electric current for an AC network with more or fewer phases than three. In other respects, moreover, the invention is of course in no way limited to the embodiments described above, as a multiplicity of possibilities for modifications thereof are probably obvious to one skilled in the art without having therein to deviate from the basic idea of the invention as defined in the attached claims.
example, their respective claw couplings. In such a situation the engine control units of one or more combustion engines would be arranged to be supplied with information concerning the speed and angular position of the engine control unit of one of the combustion engines whereby the speed and angular position of the aforesaid one or more combustion engines would be regulated on the basis of said information so that angular synchronisation of the combustion engines was effected before they were coupled together to drive the common shaft.

## Claims

1. A device for generating electric current for an alternating-current network (1), which device comprises a first electricity generating unit (3a) comprising a first generator (7a) connected to the alternating-current network, a first combustion engine (6a) for driving the first generator (7a), and a first engine control unit (5a) for controlling the first combustion engine (6a), whereby the device further comprises at least one second electricity generating unit (3b) comprising a circuit-breaker (8b), a second generator (7b) connected to the alternating-current network via said circuit-breaker (8b), a second combustion engine (6b) for driving the second generator (7b), and a second engine control unit (5b) for controlling the second combustion engine (6b), **characterised in that** the generators (7a, 7b) of the first and second electricity generating units (3a, 3b) are coupled to the respective combustion engines (6a, 6b) in such a way that all of the generators (7a, 7b) are at mutually the same angular position when the combustion engines (6a, 6b) are at mutually the same angular position, and that the first engine control unit (5a) is arranged to transmit to the second engine control unit (5b) information concerning the speed and angular position of the first combustion engine (6a) and that the second engine control unit (5b) is arranged to regulate the speed and angular position of the second combustion engine (6b) on the basis of said information so that the angle of the second combustion engine (6b) is synchronised with that of the first combustion engine (6a) and that the second generator (7b) is thereby synchronised with the first generator (7a).

2. A device according to claim 1, **characterised in that** the device comprises a controller (4) provided with means (10) for measuring the phase angle of the alternating-current network (1), whereby the controller (4) is arranged to transmit to the first engine control unit (5a) control information relating to the phase angle measured, and that the first engine control unit (5a) is arranged to regulate the speed and angular position of the first combustion engine (6a) on the basis of said information so that the first generator (7a) is phase-synchronised with the alternating-current network.

3. A device according to any one of the foregoing claims, **characterised in that** the first engine control unit (5a) is arranged to transmit to the second engine control unit (5b) time-marked information concerning the angular position of the first combustion engine (6a).

4. A device according to any one of the foregoing claims, **characterised in that** the first engine control unit (5a) is arranged to transmit to the second engine control unit (5b) time information which enables time synchronisation of the second engine control unit (5b) with the first engine control unit (5a).

5. A device according to any one of the foregoing claims, **characterised in that** the first engine control unit (5a) is connected to the second engine control unit (5b) via a databus (11).

6. A device according to claim 5, **characterised in that** the databus (11) is a CAN bus.

7. A device according to any one of the foregoing claims, **characterised in that** the device comprises two or more second electricity generating units (3b).

8. A method for control of a device (2) intended for generating electric current for an alternating-current network (1), which device comprises a first electricity generating unit (3a) and at least one second electricity generating unit (3b), whereby the first electricity generating unit (3a) comprises a first generator (7a) connected to an alternating-current network, a first combustion engine (6a) for driving the first generator (7a), and a first engine control unit (5a) for controlling the first combustion engine (6a), and the second electricity generating unit (3b) comprises a circuit-breaker (8b), a second generator (7b) connected to the alternating-current network via said circuit-breaker (8b), a second combustion engine (6b) for driving the second generator (7b), and a second engine control unit (5b) for controlling the second combustion engine (6b),
**characterised in that** the generators (7a, 7b) of the first and second electricity generating units (3a, 3b) are coupled to the respective combustion engines (6a, 6b) in such a way that all of the generators (7a, 7b) are at mutually the same angular position when the combustion engines (6a, 6b) are at mutually the same angular position, and
- **in that** the first generator (7a) is caused to generate electric current for the alternating-current network (1),
- that information concerning the speed and angular position of the first combustion engine (6a) is transmitted from the first engine control unit (5a) to the second engine control unit (5b), that the speed and angular position of the second combustion engine (6b) are regulated on the basis of said information so that the angle of the second combustion engine (6b) is synchronised with that of the first combustion engine (6a), and that the second generator (7b) is thereby synchronised with the first generator (7a), and
- that, after said regulating, the second generator (7b) is connected to the alternating-current network (1) by closing of said circuit-breaker (8b).

9. A method according to claim 8, **characterised in that** the first generator (7a) is phase-synchronised with the alternating-current network (1) before being connected to the alternating-current network (1).

10. A method according to claim 9, **characterised in that** the phase angle of the alternating-current network (1) is measured by means of a controller (4) and that control information relating to the phase angle measured is transmitted from the controller (4) to the first engine control unit (5a), whereby the speed and angular position of the first combustion engine (6a) are regulated on the basis of said control information so that the first generator (7a) is phase-synchronised with the alternating-current network.

11. A method according to any one of claims 8-10, **characterised in that** the information concerning the angular position of the first combustion engine (6a) is transmitted time-marked to the second engine control unit (5b).

12. A method according to any one of claims 8-11, **characterised in that** time information which enables time synchronisation of the second engine control unit (5b) with the first engine control unit (5a) is transmitted from the first engine control unit (5a) to the second engine control unit (5b).

13. A method according to any one of claims 8-12, **characterised in that** said information from the first engine control unit (5a) to the second engine control unit (5b) is transmitted via a databus (11), preferably in the form of a CAN bus.

14. A method according to any one of claims 8-13, **characterised in that** said regulating of the speed and angular position of the second combustion engine (6b) is effected by the second combustion engine (6b) being run up to substantially the same speed as the first combustion engine (6a), followed by the angular position of the second combustion engine (6b) being adjusted according to the angular position of the first combustion engine (6a).

15. A method according to any one of claims 8-13, **characterised in that** said regulating of the speed and angular position of the second combustion engine (6b) is effected by the second combustion engine (6b) being run up to a speed which differs somewhat from the speed of the first combustion engine (6a), followed by the speed of the second combustion engine (6b) being caused to match the speed of the first combustion engine (6a) when the second combustion engine (6b) exhibits the desired angular position relative to the angular position of the first combustion engine (6a).

## Patentansprüche

1. Vorrichtung zum Erzeugen von elektrischem Strom für ein Wechselstromnetz (1), wobei die Vorrichtung eine erste Stromerzeugungseinheit (3a) umfasst, die einen ersten Generator (7a), der mit dem Wechselstromnetz verbunden ist, einen ersten Verbrennungsmotor (6a) zum Antreiben des ersten Generators (7a) und eine erste Motorsteuereinheit (5a) zum Steuern des ersten Verbrennungsmotors (6a) umfasst, wobei die Vorrichtung ferner wenigstens eine zweite Stromerzeugungseinheit (3b) umfasst, die einen Trennschalter (8b), einen zweiten Generator (7b), der über den Trennschalter (8b) mit dem Wechselstromnetz verbunden ist, einen zweiten Verbrennungsmotor (6b) zum Antreiben des zweiten Generators (7b) und eine zweite Motorsteuereinheit (5b) zum Steuern des zweiten Verbrennungsmotors (6b) umfasst,
**dadurch gekennzeichnet, dass**
die Generatoren (7a, 7b) der ersten und zweiten Stromerzeugungseinheit (3a, 3b) mit den jeweiligen Verbrennungsmotoren (6a, 6b) derart verbunden sind, dass alle Generatoren (7a, 7b) sich gemeinsam in der gleichen Winkelposition befinden, wenn sich die Verbrennungsmotoren (6a, 6b) gemeinsam in der gleichen Winkelposition befinden,
und dass die erste Motorsteuereinheit (5a) dazu eingerichtet ist, an die zweite Motorsteuereinheit (5b) Information über die Drehzahl und die Winkelposition des ersten Verbrennungsmotors (6a) zu übertragen,
und dass die zweite Motorsteuereinheit (5b) dazu eingerichtet ist, die Drehzahl und die Winkelposition des zweiten Verbrennungsmotors (6b) auf der Grundlage dieser Information zu regeln, sodass der Winkel des zweiten Verbrennungsmotors (6b) mit dem des ersten Verbrennungsmotors (6a) synchronisiert ist, und dass der zweite Generator (7b) dabei mit dem ersten Generator (7a) synchronisiert ist.

2. Vorrichtung nach Anspruch 1, **dadurch gekennzeichnet, dass** die Vorrichtung eine Steuerung (4) umfasst, die mit Mitteln (10) zum Messen des Phasenwinkels des Wechselstromnetzes (1) versehen ist, wobei die Steuerung (4) so eingerichtet ist, dass sie an die erste Motorsteuereinheit (5a) Steuerinformation in Bezug auf den gemessenen Phasenwinkel überträgt, und dass die erste Motorsteuereinheit (5a) dazu ausgebildet ist, die Drehzahl und die Winkelposition des ersten Verbrennungsmotors (6a) auf der Grundlage dieser Information zu regeln, sodass der erste Generator (7a) mit dem Wechselstromnetz phasensychronisiert ist.

3. Vorrichtung nach einem der vorhergehenden Ansprüche, **dadurch gekennzeichnet, dass** die erste Motorsteuereinheit (5a) dazu eingerichtet ist, an die zweite Motorsteuereinheit (5b) zeitmarkierte Information bezüglich der Winkelposition des ersten Verbrennungsmotors (6a) zu übertragen.

4. Vorrichtung nach einem der vorhergehenden Ansprüche, **dadurch gekennzeichnet, dass** die erste Motorsteuereinheit (5a) dazu eingerichtet ist, an die zweite Motorsteuereinheit (5b) zeitliche Information zu übertragen, die eine Zeitsynchronisierung der zweiten Motorsteuereinheit (5b) mit der ersten Motorsteuereinheit (5a) ermöglicht.

5. Vorrichtung nach einem der vorhergehenden Ansprüche, **dadurch gekennzeichnet, dass** die erste Motorsteuereinheit (5a) mit der zweiten Motorsteuereinheit (5b) über einen Datenbus (11) verbunden ist.

6. Vorrichtung nach Anspruch 5, **dadurch gekennzeichnet, dass** der Datenbus (11) ein CAN-Bus ist.

7. Vorrichtung nach einem der vorhergehenden Ansprüche, **dadurch gekennzeichnet, dass** die Vorrichtung zwei oder mehrere zweite Stromerzeugungseinheiten (3b) umfasst.

8. Verfahren zum Steuern einer Vorrichtung (2), die dazu vorgesehen ist, elektrischen Strom für ein Wechselstromnetz (1) zu erzeugen, wobei die Vorrichtung eine erste Stromerzeugungseinheit (3a) und wenigstens eine zweite Stromerzeugungseinheit (3b) umfasst, wobei die erste Stromerzeugungseinheit (3a) einen ersten Generator (7a), der mit einem Wechselstromnetz verbunden ist, einen ersten Verbrennungsmotor (6a) zum Antreiben des ersten Generators (7a) und eine erste Motorsteuereinheit (5a) zum Steuern des ersten Verbrennungsmotors (6a) umfasst, wobei die zweite Stromerzeugungseinheit (3b) einen Trennschalter (8b), einen zweiten Generator (7b), der über den Trennschalter (8b) mit dem Wechselstromnetz verbunden ist, einen zweiten Verbrennungsmotor (6b) zum Antreiben des zweiten Generators (7b) und eine zweite Motorsteuereinheit (5b) zum Steuern des zweiten Verbrennungsmotors (6b) umfasst,
**dadurch gekennzeichnet, dass**
die Generatoren (7a, 7b) der ersten und zweiten Stromerzeugungseinheit (3a, 3b) mit den jeweiligen Verbrennungsmotoren (6a, 6b) derart verbunden sind, dass alle Generatoren (7a, 7b) sich gemeinsam in der gleichen Winkelposition befinden, wenn sich die Verbrennungsmotoren (6a, 6b) gemeinsam in der gleichen Winkelposition befinden, und
- dass der erste Generator (7a) dazu veranlasst wird, elektrischen Strom für das Wechselstromnetz (1) zu generieren,
- dass Information bezüglich der Drehzahl und der Winkelposition des ersten Verbrennungsmotors (6a) von der ersten Motorsteuereinheit (5a) zu der zweiten Motorsteuereinheit (5b) übertragen wird, und dass die Drehzahl und die Winkelposition des zweiten Verbrennungsmotors (6b) auf der Grundlage dieser Information geregelt wird, sodass der Winkel des zweiten Verbrennungsmotors (6b) mit dem des ersten Verbrennungsmotors (6a) synchronisiert ist, und dass der zweite Generator (7b) dabei mit dem ersten Generator (7a) synchronisiert ist, und
- dass, nach dem Regeln, der zweite Generator (7b) mit dem Wechselstromnetz (1) durch Schließen des Trennschalters (8b) verbunden wird.

9. Verfahren nach Anspruch 8, **dadurch gekennzeichnet, dass** der erste Generator (7a) mit dem Wechselstromnetz (1) phasensynchronisiert wird, bevor er mit dem Wechselstromnetz (1) verbunden wird.

10. Verfahren nach Anspruch 9, **dadurch gekennzeichnet, dass** der Phasenwinkel des Wechselstromnetzes (1) mittels einer Steuerung (4) gemessen wird und dass Steuerinformation in Bezug auf den gemessenen Phasenwinkel von der Steuerung (4) zu der ersten Motorsteuereinheit (5a) übertragen wird, wobei die Drehzahl und die Winkelposition des ersten Verbrennungsmotors (6a) auf der Grundlage der Steuerinformation geregelt werden, sodass der erste Generator (7a) mit dem Wechselstromnetz phasensychronisiert ist.

11. Verfahren nach einem der Ansprüche 8-10, **dadurch gekennzeichnet, dass** die Information bezüglich der Winkelposition des ersten Verbrennungsmotors (6a) zeitmarkiert zu der zweiten Motorsteuereinheit (5b) übertragen wird.

12. Verfahren nach einem der Ansprüche 8-11, **dadurch gekennzeichnet, dass** die Zeitinformation, die zeitliche Synchronisation der zweiten Motorsteuereinheit (5b) mit der ersten Motorsteuereinheit (5a) ermöglicht, von der ersten Motorsteuereinheit (5a) zu der zweiten Motorsteuereinheit (5b) übertragen wird.

13. Verfahren nach einem der Ansprüche 8-12, **dadurch gekennzeichnet, dass** die Information von der ersten Motorsteuereinheit (5a) zu der zweiten Motorsteuereinheit (5b) mit einem Datenbus (11), vorzugsweise in Form eines Can-Busses, übertragen wird.

14. Verfahren nach einem der Ansprüche 8-13, **dadurch gekennzeichnet, dass** das Regeln der Drehzahl und der Winkelposition des zweiten Verbrennungsmotors (6b) dadurch bewirkt wird, dass der zweite Verbrennungsmotor (6b) auf im Wesentlichen die gleiche Drehzahl wie der erste Verbrennungsmotor (6a) hochgefahren wird, gefolgt von dem Einstellen der Winkelposition des zweiten Verbrennungsmotors (6b) entsprechend der Winkelposition des ersten Verbrennungsmotors (6a).

15. Verfahren nach einem der Ansprüche 8-13, **dadurch gekennzeichnet, dass** das Regeln der Drehzahl und der Winkellage des zweiten Verbrennungsmotors (6b) dadurch bewirkt wird, dass der zweite Verbrennungsmotor (6b) auf eine Drehzahl hochgefahren wird, die sich geringfügig von der Drehzahl des ersten Verbrennungsmotors (6a) unterscheidet, gefolgt von dem Bewirken, dass die Drehzahl des zweiten Verbrennungsmotors (6b) der Drehzahl des ersten Verbrennungsmotors (6a) entspricht, wenn der zweite Verbrennungsmotor (6b) die gewünschte Winkelposition gegenüber der Winkelposition des ersten Verbrennungsmotors (6a) aufweist.

## Revendications

1. Dispositif pour la génération de courant électrique pour un réseau de courant alternatif (1), lequel dispositif comprend une première unité de génération d'électricité (3a) comprenant un premier générateur (7a) connecté au réseau de courant alternatif, un premier moteur à combustion (6a) pour la commande du premier générateur (7a), et une première unité de commande de moteur (5a) pour le contrôle du premier moteur à combustion (6a), par lequel le dispositif comprend en outre au moins une deuxième unité de génération d'électricité (3b) comprenant un disjoncteur (8b), un deuxième générateur (7b) connecté au réseau de courant alternatif via ledit disjoncteur (8b), un deuxième moteur à combustion (6b) pour la commande du deuxième générateur (7b), et une deuxième unité de commande de moteur (5b) pour le contrôle du deuxième moteur à combustion (6b), **caractérisé en ce que** les générateurs (7a, 7b) des première et deuxième unités de génération d'électricité (3a, 3b) sont couplées aux moteurs à combustion respectifs (6a, 6b) d'une telle manière que tous les générateurs (7a, 7b) sont mutuellement à la même position angulaire lorsque les moteurs à combustion (6a, 6b) sont mutuellement à la même position angulaire, et **en ce que** la première unité de commande de moteur (5a) est disposée pour transmettre à la deuxième unité de commande de moteur (5b) des informations concernant la vitesse et la position angulaire du premier moteur à combustion (6a) et **en ce que** la deuxième unité de commande de moteur (5b) est disposée pour réguler la vitesse et la position angulaire du deuxième moteur à combustion (6b) sur la base desdites informations de sorte que l'angle du deuxième moteur à combustion (6b) est synchronisé avec ce premier moteur à combustion (6a) et ce deuxième générateur (7b) est ainsi synchronisé avec le premier générateur (7a).

2. Dispositif selon la revendication **1, caractérisé en ce que** le dispositif comprend un dispositif de commande (4) fourni avec des moyens (10) pour la mesure de l'angle de phase du réseau de courant alternatif (1), par lequel le dispositif de commande (4) est disposé pour transmettre à la première unité de commande de moteur (5a) des informations de commande concernant l'angle de phase mesuré, et **en ce que** la première unité de commande de moteur (5a) est disposée pour réguler la vitesse et la position angulaire du premier moteur à combustion (6a) sur la base desdites informations de sorte que le premier générateur (7a) est synchronisé en phase avec le réseau de courant alternatif.

3. Dispositif selon l'une quelconque des revendications précédentes, **caractérisé en ce que** la première unité de commande de moteur (5a) est disposée pour transmettre à la deuxième unité de commande de moteur (5b) des informations marquées dans le temps concernant la position angulaire du premier moteur à combustion (6a).

4. Dispositif selon l'une quelconque des revendications précédentes, **caractérisé en ce que** la première unité de commande de moteur (5a) est disposée pour transmettre à la deuxième unité de commande de moteur (5b) des informations temporelles qui permettent la synchronisation temporelle de la deuxième unité de commande de moteur (5b) avec la première unité de commande de moteur (5a).

5. Dispositif selon l'une quelconque des revendications précédentes, **caractérisé en ce que** la première unité de commande de moteur (5a) est connectée à la deuxième unité de commande de moteur (5b) via un bus de données (11).

6. Dispositif selon la revendication 5, **caractérisé en ce que** le bus de données (11) est un bus CAN.

7. Dispositif selon l'une quelconque des revendications précédentes, **caractérisé en ce que** le dispositif comprend deux ou plusieurs deuxièmes unités de génération d'électricité (3b).

8. Procédé pour le contrôle d'un dispositif (2) destiné à générer le courant électrique pour un réseau de courant alternatif (1), lequel dispositif comprend une première unité de génération d'électricité (3a) et au moins une deuxième unité de génération d'électricité (3b), par lequel la première unité de génération d'électricité (3a) comprend un premier générateur (7a) connecté à un réseau de courant alternatif, un premier moteur à combustion (6a) pour la commande du premier générateur (7a), et une première unité de commande de moteur (5a) pour le contrôle du premier moteur à combustion (6a), et la deuxième unité de génération d'électricité (3b) comprend un disjoncteur (8b), un deuxième générateur (7b) connecté au réseau de courant alternatif via ledit disjoncteur (8b), un deuxième moteur à combustion (6b) pour la commande du deuxième générateur (7b), et une deuxième unité de commande de moteur (5b) pour le contrôle du deuxième moteur à combustion (6b),
**caractérisé en ce que** les générateurs (7a, 7b) des première et deuxième unités de génération d'électricité (3a, 3b) sont couplées aux moteurs à combustion respectifs (6a, 6b) d'une telle manière que tous les générateurs (7a, 7b) sont mutuellement à la même position angulaire lorsque les moteurs à combustion (6a, 6b) sont mutuellement à la même position angulaire, et
- **en ce que** le premier générateur (7a) est amené à générer le courant électrique pour le réseau de courant alternatif (1),
- **en ce que** les informations concernant la vitesse et la position angulaire du premier moteur à combustion (6a) sont transmises à partir de la première unité de commande de moteur (5a) à la deuxième unité de commande de moteur (5b), **en ce que** la vitesse et la position angulaire du deuxième moteur à combustion (6b) sont régulées sur la base desdites informations de sorte que l'angle du deuxième moteur à combustion (6b) est synchronisé avec ce premier moteur à combustion (6a), et ce deuxième générateur (7b) est ainsi synchronisé avec le premier générateur (7a), et
- **en ce que**, après ladite régulation, le deuxième générateur (7b) est connecté au réseau de courant alternatif (1) par la fermeture dudit disjoncteur (8b).

9. Procédé selon la revendication 8, **caractérisé en ce que** le premier générateur (7a) est synchronisé en phase avec le réseau de courant alternatif (1) avant d'être connecté au réseau de courant alternatif (1).

10. Procédé selon la revendication 9, **caractérisé en ce que** l'angle de phase du réseau de courant alternatif (1) est mesuré aux moyens d'un dispositif de commande (4) et ces informations de commande concernant l'angle de phase mesuré sont transmises à partir du dispositif de commande (4) à la première unité de commande de moteur (5a), par lequel la vitesse et la position angulaire du premier moteur à combustion (6a) sont régulées sur la base desdites informations de commande de sorte que le premier générateur (7a) est synchronisé en phase avec le réseau de courant alternatif.

11. Procédé selon l'une quelconque des revendications 8-10, **caractérisé en ce que** les informations concernant la position angulaire du premier moteur à combustion (6a) sont transmises marquées dans le temps à la deuxième unité de commande de moteur (5b) .

12. Procédé selon l'une quelconque des revendications 8-11, **caractérisé en ce que** les informations temporelles qui permettent la synchronisation temporelle de la deuxième unité de commande de moteur (5b) avec la première unité de commande de moteur (5a) sont transmises à partir de la première unité de commande de moteur (5a) à la deuxième unité de commande de moteur (5b).

13. Procédé selon l'une quelconque des revendications 8-12, **caractérisé en ce que** lesdites informations provenant de la première unité de commande de moteur (5a) à la deuxième unité de commande de moteur (5b) sont transmises via un bus de données (11), de préférence sous forme d'un bus CAN.

14. Procédé selon l'une quelconque des revendications 8-13, **caractérisé en ce que** ladite régulation de la vitesse et de la position angulaire du deuxième moteur à combustion (6b) est effectuée par le deuxième moteur à combustion (6b) montant jusqu'à sensiblement la même vitesse que le premier moteur à combustion (6a), suivi par la position angulaire du deuxième moteur à combustion (6b) étant réglé selon la position angulaire du premier moteur à combustion (6a).

15. Procédé selon l'une quelconque des revendications 8-13, **caractérisé en ce que** ladite régulation de la vitesse et de la position angulaire du deuxième moteur à combustion (6b) est effectuée par le deuxième moteur à combustion (6b) montant jusqu'à une vitesse qui diffère quelque peu de la vitesse du premier moteur à combustion (6a), suivi par la vitesse du deuxième moteur à combustion (6b) étant amené à correspondre à la vitesse du premier moteur à combustion (6a) lorsque le deuxième moteur à combustion (6b) présente la position désirée angulaire par rapport à la position angulaire du premier moteur à combustion (6a) .
